# EUROPEAN PATENT SPECIFICATION

(11) **EP 3 365 187 B1**
(45) Date of publication and mention of the grant of the patent: **21.08.2019**
(21) Application number: 15801240.1
(22) Date of filing: 22.10.2015
(51) Int. Cl.: B60C 9/00, B60C 9/06, D02G 3/48

(54) **HYBRID CORD AS CARCASS REINFORCEMENT IN BIAS TIRE**
HYBRIDKORD ALS KARKASSENVERSTÄRKUNG BEI DIAGONALREIFEN
FIL HYBRIDE FAISANT OFFICE DE RENFORCEMENT DE CARCASSE DANS DES PNEUS À CARCASSE DIAGONALE

(43) Date of publication of application: 29.08.2018
(73) Proprietor: Kordsa Teknik Tekstil Anonim Sirketi, Izmit/Kocaeli (TR)
(72) Inventor: FIDAN, Mehmet Sadettin, Kocaeli (TR); AKSOY, Kursat, Kocaeli (TR); MERTOL, Bekir Anil, Kocaeli (TR)
(74) Representative: Dericioglu Kurt, Ekin
(86) International application number: PCT/IB2015/058152
(87) International publication number: WO 2017/068394

(56) References cited:
- EP-A1- 2 045 379
- US-A- 4 155 394
- US-A- 4 234 030
- US-A- 4 957 799

## Description

### FIELD OF THE INVENTION

The present invention relates generally to pneumatic tires and more specifically to hybrid cords as carcass reinforcements in bias tires.

### BACKGROUND OF THE INVENTION

Bias ply tires have a carcass formed of an even number of layers or plies of cord fabric. They are also called as diagonal ply or cross ply. The reinforcing cords of each layer proceed on the tire diagonally from one bead portion to another bead portion. The bias angle of the cord path relative to the axial direction of the tire is greater than 15 degrees. The carcass cords run in opposite directions in each successive layer (or ply) of reinforcing material, resulting in criss-cross pattern. Breakers are additional layers of reinforcing material or plies which may be included for further reinforcing of the tire, these layers overlying the crown area of the tire to further reinforce the tread region. The cords of these reinforcements do not extend to bead portions of the tire.

The other type of tire construction is the radial tire. In a radial tire the cords of the carcass extend from bead to bead across the crown of the tire substantially in radial planes passing through the rotational axis of the tire. Radially outward of the ply or plies under the tread is an high modulus belt made of one or more layers of cords, the angles of the belt cords being relatively low, for example 15 to 25 degrees with respect to the equatorial plane (circumferential direction) of the tire. The present invention does not relates to the radial tires.

In pneumatic bias tires for heavy vehicles, there has hitherto been provided a carcass composed of rubberized ply layers each containing relatively thin nylon cords of, for example, from 940 dtex/2 to about 1400 dtex/2. The tires usually formed by laminating 8 or more carcass plies one upon another to cross each other at a predetermined cord angle.

In order to reduce ply numbers of carcass, thicker nylon cords like 2100/2 and 2100/3 are also proposed. But such applications do not improve flatspot behaviour and do not eliminate the need for post-cure inflation process of the tire.

On the other hand, hybrid cord constructions containing high tenacity/high modulus yarn with nylon have been proposed and used as tire reinforcement extensively in tire technology. Some examples can be given as follows.

In US 2007/0235116 and US 2010/0024948, the three-ply hybrid cord comprising two ply aramid and one ply nylon yarn(aramid 3300 dtex/2+nylon 1880 dtex, 22% nylon content) with different twist levels have been proposed as radial carcass reinforcements in aircraft tires.

US4234030 and US4155394 are also known as examples for three-ply hybrid cords for carcass reinforcement. US4957799 is an another example of three ply cord for cap ply reinforcement.

EP2045379 discloses a broad total linear density range between 440 and 5400 dtex for aramid and nylon hybrid cords having asymmetric twist for aircraft applications.

In US 6,799,618, three and four ply aramide/nylon hybrid cords having asymmetric (unbalanced) twist (AR1100 dtex/2+NY470 dtex/1, AR1100 dtex/2+NY940 dtex/1, AR1100 dtex/3+NY940 dtex/1 etc., with 18%, 30%, and 22% nylon contents respectively) have been proposed as cap ply/overlay reinforcement in pneumatic tires.

In US 5,036,896 three ply aramid/nylon and aramid/polyester hybrid cords with asymmetric (unbalanced) twist (e.g. AR3300 dtex/2+NY2100 dtex/2, 39% nylon content), have been proposed to use as folded and unfolded belt reinforcement in radial aircraft tires.

In US 7,222,481 hybrid cords having low modulus (less than 900 cN/tex) core and high modulus (greater than 1300 cN/tex) wrap which is produced with core insertion technique have been disclosed and proposed as crown reinforcement in pneumatic tires.

### SUMMARY OF THE INVENTION

The invention provides aramid/nylon hybrid cords having high nylon content for bias carcass reinforcement in pneumatic tires. The tires are preferably truck and aircraft tires.

In order to reduce tire weight, flatspot and eliminate the post-cure inflation, but also to improve endurance in bias tires, aramid/nylon 66 hybrid cords with high nylon 66 content (weight percentage) are proposed as carcass ply reinforcement.

While aramid ply in hybrid cord provides high strength and modulus, nylon 66 provides robust adhesion and improved flex fatigue resistance. Nylon/aramid ratio is an important parameter controlling dynamic adhesion and flex fatigue resistance for a given twist level of the hybrid cord.

### DETAILED DESCRIPTION OF THE INVENTION

According to the present invention, two ply aramid/nylon hybrid cords which have one ply is made of aramide yarns and the other ply is made of nylon yarns, these yarns having a twist in one direction prior to plying (may also called as cabling), and the plurality of yarns being plied together with a twist in the opposite direction to form cord, the yarn twist being at least equal to the plying (cabling) twist, said yarn and plying (cabling) twists being such as to give a balanced twisted cord with optimum nylon content, improves bias tire endurance and enables to eliminate post-cure inflation process. In two-ply hybrid cord constructions, aramide and nylon plies (yarns within cord) have smooth contact surface with each other at interface. In case of three or higher number of plies, semi-circular ply cross-sections become triangular which gives rise to increased contact surface and higher degree of friction at the interface under dynamic conditions. On the other hand, interface filaments of the each ply yarn are much more deformed due to triangular cross-sections. Therefore, two-ply hybrid cord constructions are proposed in our invention.

Disc fatigue lab results are given below. According to the lab results two-ply hybrid cord having the same helix angle and even the same nylon content gives better fatigue resistance results (strength retention after fatigue) than three-ply hybrid cord.

**Table 1. Disc fatigue analysis results**

| Cord construction | AR3340+NY2800 | AR1670/2+NY2800/1 | AR1670/2+1400 |
|---|---|---|---|
| Number of plies | 2 | 3 | 3 |
| Nylon content(%) | 45,6 | 45,6 | 29,5 |
| Cord twist | 335 | 335 | 380 |
| Helix angle | 46° | 46° | 46° |
| Retained strength after disc fatigue* | 85 | 81 | 74 |

| | | | |
|---|---|---|---|
| * 3,6million cycle(2.0% extension and 14% compression) | | | |

Tire results confirm the lab results. Reference is a bias truck tire 10.00-20 with 8 ply 1400/2 nylon carcass. Based on equal carcass strength, by using AR/NY hybrid cords, number of carcass plies has been reduced from 8 to 4. By using AR3340+NY2800 as carcass reinforcement, overload endurance has been improved approximately 40% compared to AR1670/2+NY1400/1 (4-ply carcass) and nylon 6, 1400/2 (8-ply carcass).

### BRIEF DESCRIPTION of THE DRAWINGS

The characteristics and other advantages of the invention will be better understood with reference to the description of a non-limitative example, with which are associated in the drawings;

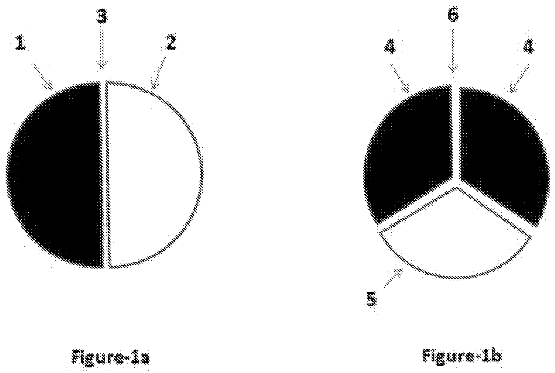

Figure 1a. Radial cross-section of two ply hybrid cord in which,
   1. aramide ply (semi-circular)
   2. nylon ply (semi-circular)
   3. contact surface of aramide and nylon plies (interface)
Figure 1b. Radial cross-section of three-ply hybrid cord in which,
   4. aramide ply (triangular)
   5. nylon ply (triangular)
   6. contact surface of aramide and nylon plies (interface)

Nylon has two-fold function, namely it works as lubricant or cushion together with aramide yarn improving dynamic fatigue resistance, and other function is to enhance overall hybrid cord (aramide+nylon) adhesion. As well known, non-active surface of aramide filaments gives poor adhesion retention under flexing. Nylon filaments having more active sites (functional groups) on their surface gives superior adhesion even with conventional RFL adhesives.

Optimum nylon content of the said hybrid cord is preferably between 45 and 65%, more preferably between 50 and 60%. If the nylon content of said hybrid cord less than 45%, flex fatigue resistance and adhesion retention after flexing becomes poorer, and if the nylon content of said hybrid cord is higher than 65%, effective modulus and tenacity becomes lower. With higher nylon contents, cord diameters becomes larger which leads to higher rubber gauge and lower cord-to-cord distance (rivet area) between parallel cords within the carcass layer. Lower rivet area between cords can easily initiate the crack between the cords under flexing conditions.

High nylon surface on hybrid cords improves cord-rubber separation resistance under dynamic conditions, namely against inter-laminar stresses between carcass plies due to pantographing movements.

In the present invention, total linear density value of the said hybrid cord is preferably between 4000-12000 dtex, more preferably between 6000-9000 dtex. The total hybrid cord linear density value can be obtained by adding the nominal linear density values of aramid and nylon yarns used in hybrid cord (e.g. the total linear density value for AR3340+NY2800 is 6140 dtex).

The invention in its preferred form, twist level of the hybrid cord changes between 150 and 400 turns per meter (tpm).

In most preferred embodiment of the present invention, a bias tire carcass for pneumatic tires which have reinforcing layers comprising hybrid cords consist of one ply is made of aramide yarns and one ply is made of nylon yarns with 50-60% nylon content by weight, are balanced twisted cords and total linear density value of said hybrid cord is between 6000-9000 dtex.

In order to increase the breaking strength (simultaneous breaking of nylon and aramid plies in hybrid cord), up to 3% overfeed of aramid ply can be applied during twisting process (the length of aramid yarn in untwisted hybrid cord can be up to 3% longer than nylon yarn).

## Claims

1. A bias carcass for pneumatic tires comprising a plurality of two ply hybrid cords **characterized in that** said two ply hybrid cords consist of one ply of aramide yarns (1) and one ply of nylon yarns (2), and said hybrid cords have 45-65% nylon content by weight and a total linear density value between 6000-9000 dtex and a twisting level of 150-400 turns/meter.

2. A bias carcass for pneumatic tires comprising plurality of two ply hybrid cords according to the preceding claim wherein said two ply hybrid cords have 50-60% nylon content by weight.

3. A bias carcass for pneumatic tires comprising plurality of two ply hybrid cords according to the preceding claims wherein said two ply hybrid cords are balanced twisted cords.

4. A bias carcass for pneumatic tires comprising plurality of two ply hybrid cords according to the preceding claims wherein said nylon yarn of said two ply hybrid cord is polyamide 66.

5. A bias carcass for pneumatic tires comprising plurality of two ply hybrid cords according to the preceding claims wherein said nylon yarn of said two ply hybrid cord is polyamide 6.

6. A bias carcass for pneumatic tires comprising plurality of two ply hybrid cords according to preceding claims wherein said aramide yarn of said two ply hybrid cord has up to 3% overfeed.

## Patentansprüche

1. Bias-Karkasse für Pneumatikreifen, umfassend eine Vielzahl von zweilagigen Hybridkorden, **dadurch gekennzeichnet, dass** die zweilagigen Hybridkorden aus einer Lage aus Aramidgarne (1) und einer Lage aus Nylongarne (2) bestehen und die Hybridkordeln 45-65% Nylongehalt pro Gewicht und einen linearen Gesamtdichtewert zwischen 6000-9000 dtex und einem Verdrillungsgrad von 150-400 Umdrehungen/Meter aufweisen.

2. Bias-Karkasse für Pneumatikreifen, umfassend eine Vielzahl von zweilagigen Hybridkorden gemäß dem vorhergehenden Anspruch, wobei die zweilagigen Hybridkorden 50-60% Nylongehalt pro Gewicht aufweisen.

3. Bias-Karkasse für Pneumatikreifen, umfassend eine Vielzahl von zweilagigen Hybridkorden nach den vorhergehenden Ansprüchen, wobei die zweilagigen Hybridkorden ausgewogene verdrillte Korden sind.

4. Bias-Karkasse für Pneumatikreifen, umfassend eine Vielzahl von zweilagigen Hybridkorden gemäß den vorhergehenden Ansprüchen, wobei das Nylongarn der zweilagigen Hybridkordel Polyamid 66 ist.

5. Bias-Karkasse für Pneumatikreifen, umfassend eine Vielzahl von zweilagigen Hybridkorden gemäß den vorhergehenden Ansprüchen, wobei das Nylongarn der zweilagigen Hybridkordel Polyamid 6 ist.

6. Bias-Karkasse für Pneumatikreifen, umfassend eine Vielzahl von zweilagigen Hybridkorden nach vorhergehenden Ansprüchen, wobei die Aramidgarn des zweilagigen Hybridkords bis zu 3% Überfütterung aufweist.

## Revendications

1. Carcasse à biais pour pneumatiques comprenant une pluralité de corde hybrides à deux plis, **caractérisée en ce que** lesdits cordes hybrides à deux plis sont constitués d'un pli de fils d'aramide (1) et d'un pli de fils de nylon (2), et lesdits cordes hybrides ont une teneur en nylon de 45-65% en poids et une valeur de densité linéaire totale comprise entre 6000-9000 dtex et un niveau de torsion de 150-400 tours/mètre.

2. Carcasse à biais pour pneumatiques comprenant une pluralité de corde hybrides à deux plis selon les revendications précédentes dans laquelle lesdites cordes hybrides à deux plis ont une teneur en nylon de 50-60% en poids.

3. Carcasse à biais pour pneumatiques comprenant une pluralité de corde hybrides à deux plis selon les revendications précédentes dans laquelle lesdites cordes hybrides à deux plis sont des cordes torsadées équilibrées.

4. Carcasse à biais pour pneumatiques comprenant une pluralité de corde hybride à deux plis selon les revendications précédentes dans laquelle ledit fil de nylon de ladite corde hybride à deux plis est du polyamide 66.

5. Carcasse à biais pour pneumatiques comprenant une pluralité de corde hybride à deux plis selon les revendications précédentes dans laquelle ledit fil de nylon de ladite corde hybride à deux plis est du polyamide 6.

6. Carcasse à biais pour pneumatiques comprenant une pluralité de corde hybride à deux plis selon les revendications précédentes dans laquelle ledit fil d'aramide de ladite corde hybride à deux plis a une suralimentation allant jusqu'à 3%.
